# EUROPÄISCHE PATENTSCHRIFT

(11) **EP 2 835 087 B1**
(45) Veröffentlichungstag und Bekanntmachung des Hinweises auf die Patenterteilung: **10.10.2018**
(21) Anmeldenummer: 13179947.0
(22) Anmeldetag: 09.08.2013
(51) Int. Cl.: A47L 9/14, B01D 46/02

(54) **STAUBSAUGERFILTERBEUTEL MIT BEABSTANDUNGSELEMENT**
VACUUM CLEANER FILTER BAG WITH SPACING ELEMENT
SAC FILTRANT D'ASPIRATEUR AVEC ÉLÉMENT D'ÉCARTEMENT

(43) Veröffentlichungstag der Anmeldung: 11.02.2015
(73) Patentinhaber: Eurofilters N.V., 3900 Overpelt (BE)
(72) Erfinder: Schultink, Jan, 3900 Overpelt (BE); Sauer, Ralf, 3900 Overpelt (BE)
(74) Vertreter: Pfenning, Meinig & Partner mbB

(56) Entgegenhaltungen:
- EP-A1- 2 420 453
- EP-A1- 2 465 398
- WO-A1-00/00269
- WO-A1-2005/034708
- DE-A1-102008 045 683
- DE-U1-202009 004 757

## Beschreibung

Die vorliegende Erfindung betrifft einen Staubsaugerfilterbeutel aus Vliesstoff, der zumindest an einer Stelle randseitig eine den Beutel abschließende Verbindung der Vliesstofflagen aufweist. An zumindest einer Stelle des Randes ist dabei ein Beabstandungsmittel umfasst, das durch eine doppelte Schweißnaht oder versteifende Elemente, die in diesem Bereich angebracht sind, ausgebildet ist. Kennzeichnendes Merkmal des Staubsaugerfilterbeutels gemäß der vorliegenden Erfindung ist eine in einem Bereich des Staubsaugerfilterbeutels gezielt erhöhte Dreipunkt-Biegesteifigkeit.

Ein wesentliches Ziel bei der Entwicklung von Staubsaugerfilterbeuteln aus Vliesstoffen ist es, den zur Verfügung stehenden Bauraum im Staubsauger möglichst vollständig zu nutzen. Dabei sind mehrere Aspekte zu berücksichtigen. Der Filterbeutel soll sich so entfalten und eine solche Form annehmen, dass der zur Verfügung stehende Bauraum möglichst vollständig ausgefüllt wird. Andererseits muss aber um den Filterbeutel herum ein Freiraum erhalten bleiben, über den die gereinigte Luft möglichst widerstandsarm abströmen kann. Staubsaugerseitig werden dazu im Gerät Rippen vorgesehen, die verhindern sollen, dass sich der Filterbeutel an die Wände anlegt. Ein besonders neuralgischer Bereich ist die Ansaugöffnung der Motor-Gebläseeinheit in einer der den Filterbeutelaufnahmeraum bildenden Wände. Vor dieser Öffnung befindet sich ein Motorschutzfilter, welches über eine gitterförmige Halterung vor der Ansaugöffnung fixiert wird.

Wenn sich der Filterbeutel vor diese Öffnung legt, strömt die Luft hauptsächlich durch die Teilfläche des Filterbeutels, die direkt vor der Ansaugöffnung liegt.

Diese Teilfläche verstopft dann überproportional, was zu einem schnellen Druckverlustanstieg führt. Gleichzeitig wird im Filterbeutelaufnahmeraum nur ein reduzierter Unterdruck erreicht. Die Saugleistung des Staubsaugers fällt dementsprechend geringer aus. Dadurch, dass es möglich sein soll ein Filterbeutelmodell in verschiedenen Staubsaugermodellen zu verwenden, wird die Auslegung eines Filterbeutelmodells weiter verkompliziert. Die Ausprägung der Verrippung des Bauraumes, Größe und Proportionen des Filterbeutelaufnahmeraumes und die Position der Ansaugöffnung der Motor-Gebläseeinheit sowie die Position der Halteplattenaufnahme unterscheiden sich oft erheblich.

Sehr weiche Vliesstoffe bieten den Vorteil einer leichteren Entfaltung des Filterbeutels als harte und steife Vliesstoffe. Andererseits besteht bei diesen Materialien die Gefahr, dass der Vliesstoff sich leicht zwischen die Rippen legt und so ein Abströmen der Luft behindert wird.

Zur Lösung dieser Problematik sind aus dem Stand der Technik verschiedene Lösungsansätze bekannt, die alle geräteseitig ausgebildet sind.

So beschreibt die EP 2 465 399 A2 einen zusätzlichen Käfig, der in den Filterbeutelaufnahmeraum eingebracht wird und den Filterbeutel von den Wänden des Filterbeutelaufnahmeraumes beabstandet.

Die EP 2 236 070 A2 betrifft eine spezielle bogenförmige Rippenstruktur vor dem Motorschutzfilter.

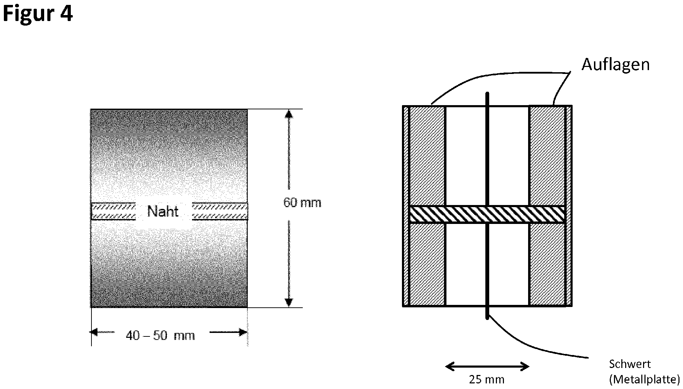

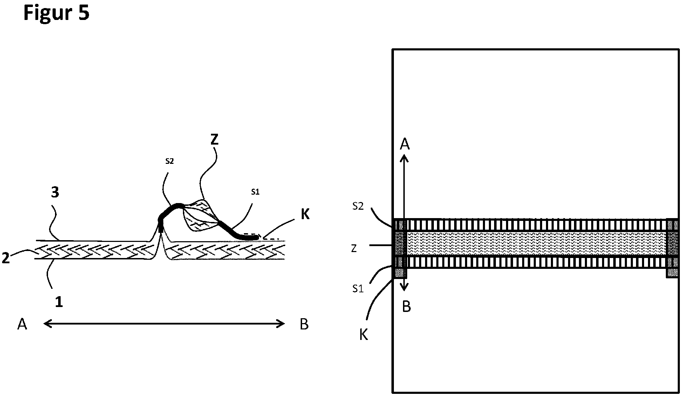

Die EP 2 326 227 B1 beschreibt ein Einlegeteil für den Filteraufnahmeraum mit Strömungsleitrippen.
Nachteilig bei diesen geräteseitigen Lösungsansätzen ist allerdings stets, dass durch die zusätzlichen Mittel der vorhandene Raum für den Filterbeutel kleiner ausfällt und somit das Staubspeichervermögen bzw. die Staubaufnahme eines entsprechenden Staubsaugermodells geringer ausfällt, als das theoretische Maximum.
Ausgehend hiervon ist es Aufgabe der vorliegenden Erfindung, einen Filterbeutel bereitzustellen, der die oben angesprochene Problematik löst. Es soll sichergestellt werden, dass die Abströmung der Luft aus dem Filterbeutelaufnahmeraum so wenig wie möglich dadurch beeinträchtigt wird, dass sich der Filterbeutel an die Innenseite des Filterbeutelaufnahmeraumes oder an die Absaugöffnung anlegt. Hierbei soll vermieden werden, dass das Volumen eines Filterbeutels über die Maßen eingeschränkt wird und auch bei längerem Betrieb keine gerätseitigen Druckabfälle resultieren. Diese Aufgabe wird gemäß einem Staubsaugerfilterbeutel mit den Merkmalen des Patentanspruchs 1 gelöst. Die abhängigen Patentansprüche stellen dabei vorteilhafte Weiterbildungen dar.
Erfindungsgemäß wird somit ein Staubsaugerfilterbeutel aus Vliesstoff angegeben, wobei der Vliesstoff an mindestens einem Rand des Staubsaugerfilterbeutels eine den Beutel abschließende Verbindung aufweist, bei der mindestens zwei Lagen Vliesstoff miteinander verbunden sind, wobei der Staubsaugerfilterbeutel zumindest an einer Stelle des Randes ein Beabstandungsmittel umfasst, das dadurch gebildet ist, dass im Bereich der den Beutel abschließenden Verbindung mindestens eine weitere Verbindung der beiden Lagen Vliesstoffe ausgebildet ist und/oder mindestens ein versteifendes Element auf mindestens einer der zwei Lagen Vliesstoff oder zwischen den zwei Lagen Vliesstoff fixiert ist, wobei die Dreipunktbiegesteifigkeit Fₘₐₓ eines Prüflings des Staubsaugerfilterbeutels, gemessen nach DIN 53 121: 2008 bei einer Wegstrecke von 7 mm mindestens 3,5 N beträgt. Die erfindungsgemäße Lösung sieht somit vor, zumindest einen randseitigen Bereich des Staubsaugerfilterbeutels, der dadurch gebildet wird, dass mindestens zwei Lagen Vliesstoff miteinander verbunden sind und somit eine den Staubsaugerfilterbeutel abschließende Verbindung vorhanden ist, versteift wird. Dies erfolgt erfindungsgemäß dadurch, dass im Bereich der abschließenden Verbindung mindestens eine weitere Verbindung der beiden Lagen Vliesstoff ausgebildet wird und/oder mindestens ein versteifendes Element auf mindestens einer der zwei Lagen Vliesstoffes oder zwischen den zwei Lagen Vliesstoff fixiert wird. Die erhöhte Steifigkeit wird anhand der Dreipunkt-Biegesteifigkeit Fₘₐₓ eines Prüflings eines Staubsaugerfilterbeutels nach DIN 53 121:2008 bei einer Wegstrecke von 7 mm bestimmt. Erfindungsgemäß beträgt die Dreipunkt-Biegesteifigkeit Fₘₐₓ mindestens 3,5 N. Als Prüfling wird dabei ein Zuschnitt eines erfindungsgemäßen Staubsaugerfilterbeutels verwendet, der wie in FIG. 4 dargestellt zugeschnitten wird. FIG. 4 zeigt dabei eine Aufsicht auf einen 60 mm, auf 40-50 mm bemessenen Zuschnitt, wobei die in FIG. 4 bezeichnete "Naht" einen Blick auf die aufgestellte randseitige Verbindung darstellt. Um zu verhindern, dass die aufrechte Stellung der Naht das Versuchsergebnis beeinflusst, wird sie mittels Klebeband (Tesa Film) an beiden Seiten der Probe derartig fixiert, dass die Schweißnaht flach auf dem Vliestoff aufliegt. Diese Ausführungsform ist auf der rechten Seite in FIG. 5 näher dargestellt.
Der genaue Aufbau sowohl des erfindungsgemäßen Filterbeutels, sowie des Prüflings wird im Detail anhand der beigefügten Figurenbeschreibung erläutert.

### Adaptiertes Prüfverfahren

Für die Untersuchungen wurde das Verfahren der Bestimmung der Dreipunktbiegesteifigkeit gemäß DIN 53 121:2008 herangezogen und adaptiert. Hierzu wurde das Unterteil einer 3-Punkt-Biegesteifigkeitsprüfvorrichtung gemäß DIN 53 121:2008 in eine Universal-Zug-Druckprüfmaschine eingebaut. In die obere Halteklemme wurde eine Metallplatte mit abgerundeter Unterkante (Schwert) und einer Dicke von 2 mm eingebaut. Die zu untersuchende Probe wurde auf die Auflager im Prüfvorrichtungsunterteil so aufgelegt, dass die zu testende Naht im 90°-Winkel zur Metallplatte ausgerichtet war. Diese Anordnung ist auf der rechten Seite der FIG. 4 skizziert. Die Probe wurde in der Prüfvorrichtung nicht fixiert.

Die Prüflinge für die Untersuchungen wurden bei Normklima 23°C und 50% rel. Luftfeuchte klimatisiert, vorbereitet und geprüft.

Der anschließende Druckversuch erfolgte unter den unten genannten Bedingungen.

| | |
|---|---|
| Prüfgerät: | Universalfestigkeitsmaschine TIRA 2805 |
| Messdose: | 10 kN |
| Vorkraft: | 0,1 N |
| Weg: | 7 mm |
| Prüfgeschwindigkeit: | 12,5 mm/min |
| Schwertdicke: | 2 mm |
| Abstand zwischen den Auflagern: | 25 mm |
| Anzahl der Messungen: | 5 |

Nach Erreichen der Vorkraft von 0,1 N wurde das Schwert im oberen Prüfvorrichtungsteil über einen Weg von 7 mm auf die Naht gedrückt und ein entsprechendes Kraft-Weg-Diagramm aufgezeichnet.

Zur Charakterisierung der Nahtsteifigkeit wurde die maximale Widerstandskraft der Naht, welche diese einer Druckverformung von 7 mm entgegengesetzte gemessen. Das Ergebnis wird als Maximalkraft Fₘₐₓ in N angegeben und als Dreipunktbiegesteifigkeit definiert.

Überraschenderweise konnte festgestellt werden, dass die erhöhte Steifigkeit des Beabstandungselements, das erfindungsgemäß am Staubsaugerfilterbeutel vorgesehen ist, ausreichend ist, die eingangs beschriebene Problematik zu lösen. Insbesondere kann dabei effektiv vermieden werden, dass der Staubsaugerfilterbeutel im Betrieb eines Staubsaugers in die Ansaugöffnung der Motor-Gebläseeinheit eingesaugt wird und diese verschließt, so dass eine Behinderung der Abströmung im Bereich der Ansaugöffnung der Motor-Gebläseeinheit unterbunden werden kann.

Das zuvor angesprochene versteifende Element kann z.B. ein Materialstreifen aus einem verglichen mit dem Vliesstoff starren Material gebildet sein, z.B. ein Papp- oder Kunststoffstreifen.
Gemäß einer bevorzugten Ausführungsform beträgt die Dreipunktbiegesteifigkeit Fₘₐₓ des Prüflings mindestens 5 N, besonders bevorzugt mindestens 7 N.
Der erfindungsgemäße Staubsaugerfilterbeutel ist auf keine spezifische Form beschränkt. Insbesondere kann der erfindungsgemäße Staubsaugerfilterbeutel in Form eines Flachbeutels oder Seitenfaltenbeutels ausgebildet sein und eine erste Lage eines Vliesstoffes, das die Einlassöffnung (E) aufweist, sowie eine zweite Lage eines luftdurchlässigen Vliesstoffes umfassen, wobei die beiden Lagen des Vliesstoffes randseitig durchgehend miteinander verbunden sind, wodurch die beiden Lagen des Vliesstoffes einen abgeschlossenen Beutel bilden. Bei einem Seitenfaltenbeutel sind die beiden Vliesstofflagen an zwei gegenüberliegenden Seiten eingeschlagen und über die anderen Seiten miteinander verschweißt.
Eine alternative Ausführungsform sieht vor, dass der Staubsaugerfilterbeutel als 3D-Beutel, plissierter Staubsaugerfilterbeutel oder Blockbodenbeutel ausgebildet ist. Derartige Filterbeutel sind z.B. aus der EP 2 445 382 A1, oder der DE 20 2005 016 309 bekannt.

Weiterhin ist vorteilhaft, wenn die mindestens eine weitere Verbindung beabstandet zur abschließenden Verbindung oder unmittelbar an die abschließende Verbindung angrenzend ausgebildet ist.
Es ist bevorzugt, dass die mindestens eine weitere Verbindung parallel oder zur abschließenden Verbindung (S1) angeordnet ist. Ebenso ist aber auch eine nicht parallele Anordnung, z.B. eine gewinkelte Anordnung der weiteren Verbindung zur abschließenden Verbindung oder auch eine wellenförmige Ausführung der mindestens einen weiteren Verbindung.

Eine weitere bevorzugte Ausführungsform sieht vor, dass die mindestens eine weitere Verbindung eine geringere Länge als die abschließende Verbindung aufweist, d.h. sich die mindestens eine weitere Verbindung nicht über die gesamte Filterbeutelbreite erstreckt.

Vorteilhaft dabei ist ferner, wenn die mindestens eine weitere Verbindung in einem Abstand von 1 bis 50 mm, bevorzugt 3 bis 25 mm, weiter bevorzugt 5 bis 15 mm zur abschließenden Verbindung verläuft.

Das Beabstandungsmittel kann neben der abschließenden Verbindung mindestens zwei weitere Verbindungen der beiden Lagen des Vliesstoffes umfassen, die jeweils im Bereich zur abschließenden Verbindung ausgebildet sind.

Die mindestens zwei weiteren Verbindungen können ebenso jeweils untereinander beabstandet und zur abschließenden Verbindung beabstandet sein, es ist weiterhin möglich, dass eine erste der mindestens zwei weiteren Verbindungen unmittelbar an die abschließende Verbindung angrenzt und die mindestens eine weitere der mindestens zwei weiteren Verbindungen jeweils untereinander beabstandet ist. Zudem kann es gegeben sein, dass beide weitere Verbindungen untereinander angrenzen und die erste der weiteren Verbindungen an die abschließende Verbindung angrenzt.

Vorteilhaft ist ferner, wenn der Abstand der mindestens zwei weiteren Verbindungen untereinander und/oder der Abstand der ersten der mindestens zwei weiteren Verbindungen zur abschließenden Verbindung unabhängig voneinander von 1 bis 50 mm, bevorzugt 3 bis 25 mm, weiter bevorzugt 5 bis 15 mm beträgt.

Jede vorhandene Verbindung, d.h. abschließende Verbindung, sowie erste oder weitere Verbindung kann dabei unabhängig voneinander eine Breite von 1-50 mm, bevorzugt 2-25 mm, besonders bevorzugt 3-10 mm aufweisen. Besonders bevorzugt sind sämtliche Verbindungen gleich breit gewählt.

Eine weitere vorteilhafte Ausgestaltungsform sieht vor, dass die mindestens eine weitere Verbindung über ihre Länge durchgehend ausgebildet ist.

Insbesondere ist die mindestens eine weitere Verbindung parallel zur abschließenden Verbindung ausgebildet ist.

Bevorzugt ist der zwischen der abschließenden Verbindung und der beabstandet hierzu angeordneten mindestens einen weiteren Verbindung und/oder der zwischen jeweils mindestens zwei beabstandet zueinander angeordneten weiteren Verbindung ausgebildete Bereich (Zwischenbereich) der beiden Lagen des Vliesstoffes unverbunden oder weist lediglich bereichsweise Verbindungen der beiden Lagen des Vliesstoffes auf. Diese Verbindungen im Zwischenbereich können z.B. punkt-, stern-, kreuz- oder balkenförmig ausgebildet sein. Besonders bevorzugt ist hierbei, dass die Verbindungen im Zwischenbereich der beiden Lagen des Vliesstoffes vorhanden sind, wobei die Verbindungen länglich ausgebildet sind und senkrecht zur abschließenden Verbindung bzw. der mindestens einen weiteren Verbindung verlaufen oder punktförmig ausgebildet.

Ferner ist vorteilhaft, wenn in Projektion der ersten auf die zweite Lage des Vliesstoffes der Umriss des Staubsaugerfilterbeutels polygonal, insbesondere rechteckig ausgebildet ist und das Beabstandungsmittel durchgängig über mindestens eine Seite des Polygons, insbesondere des Rechtecks ausgebildet ist.

Das Beabstandungsmittel ist insbesondere im Bereich einer Ansaugöffnung der Motor-Gebläseeinheit eines für den Staubsaugerfilterbeutel geeigneten Staubsaugers ausgebildet.

Gemäß einer weiteren bevorzugten Ausführungsform kann vorgesehen sein, dass auf der ersten und/oder zweiten Lage des Vliesstoffes mindestens ein zusätzliches Beabstandungsmittel ausgebildet ist, das durch eine stellenweise Verbindung von übereinander gefalteten Bereichen der jeweiligen Lage des Vliesstoffes gebildet ist. Durch diese Ausführungsform kann in einem weiteren Bereich des für den Staubsaugerfilterbeutel vorgesehenen Bauraums in einem Staubsauger eine Beabstandung erzielt werden, so dass eine weitere Verbesserung der Luftströmung innerhalb des Staubsaugerfilterbeutelraums des Staubsaugers möglich ist.

Die abschließende Verbindung und/oder die mindestens eine weitere Verbindung kann insbesondere durch Verschweißen oder durch Verkleben der beiden Lagen des Vliesstoffes hergestellt sein.
Bevorzugt ist ferner, wenn der Vliesstoff mindestens drei Filtermateriallagen umfasst, von denen mindestens eine Lage eine Vliesstofflage oder eine Scrimlage und mindestens eine Lage eine Faservlieslage, enthaltend Stapelfasern und/oder Filamente, ist. Derartige Filtermaterialien sind beispielsweise aus der EP 1 795 247 und der EP 1 960 084, sowie der europäischen Patentanmeldung mit der Anmeldenummer EP13179851.4 bekannt. Insbesondere für den Fall, dass das Vliesstoffmaterial des Staubsaugerfilterbeutels gemäß der zuvor genannten Ausführungsform relativ wenige Verbindungen der Faservlieslage zur mindestens einen weiteren Vliesstofflage oder Scrimlage aufweist, ist es vorteilhaft, dass der Vliesstoff im bzw. in den durch einen durch die Einlassöffnung in das Innere des Filterbeutels eintretenden Luftstrom unmittelbar angeströmten Bereich bzw. Bereichen eine Verbindung aufweist, bei der die mindestens eine Faservlieslage mit mindestens einer der mindestens zwei weiteren Lagen verbunden ist, so dass eine permanente Fixierung der Stapelfasern und/oder Filamente der Faservlieslage mit der mindestens einen der mindestens zwei weiteren Lagen gewährleistet ist. Alternativ oder zusätzlich hierzu kann vorgesehen sein, dass im Inneren des Staubsaugerfilterbeutels zwischen der ersten und der zweiten Lage des Vliesstoffes mindestens ein Diffusor angeordnet ist.

An der Einlassöffnung kann gegebenenfalls eine Halteplatte angebracht sein. Hierzu eignet sich insbesondere eine Halteplatte, wie sie aus der europäischen Patentanmeldung EP 2 606 799 bekannt ist.

Die vorliegende Erfindung wird anhand der nachfolgenden Beschreibung näher ausgeführt, ohne die Erfindung auf die dargestellten Ausführungsformen bzw. Figuren zu beschränken.

Dabei zeigen
- FIG. 1: eine erste Ausführungsform eines erfindungsgemäßen Staubsaugerfilterbeutels in Aufsicht und Querschnitt.
- FIG. 2 und 3: vier weitere erfindungsgemäße Ausführungsformen eines erfindungsgemäßen Staubsaugerfilterbeutels.
- FIG. 4: einen Prüfling eines erfindungsgemäßen Staubsaugerfilterbeutels, der für den Test gemäß DIN 53 121 verwendet wird, sowie
- FIG. 5: einen präparierten Prüfling eines erfindungsgemäßen Staubsaugerfilterbeutels zur Bestimmung der Dreipunkt-Biegesteifigkeit F_{max.}.

Der erfindungsgemäße Filterbeutel wird mit Beabstandungsmitteln ausgestattet, die bewirken, dass das Beutelmaterial - zumindest in wesentlichen Bereichen - sich nicht zwischen geräteseitige Rippen legt. Mehrere Varianten dieser Beabstandungsmittel sind möglich:
1. Versteifung einer oder mehrerer vorhandener Schweißnähte
   Eine Versteifung der Schweißnaht ist möglich, indem die Schweißnaht doppelt ausgeführt wird. Zusätzlich zur bestehenden funktionalen, d.h. den Beutel verschließenden Schweißnaht wird mindestens eine weitere Schweißnaht eingebracht. Diese Schweißnaht kann ebenfalls durchlaufend ausgeführt sein, es ist aber auch eine unterbrochene Struktur möglich. Wenn die zweite Schweißnaht nicht überlappend parallel zur ersten Schweißnaht ausgeführt wird, entsteht im Zwischenbereich zwischen beiden Schweißnähten eine wulstförmige Struktur, die wie eine Stoßbandage und somit als Beabstandungsmittel wirkt.
   Um eine optimale Steifigkeit zu erzielen, ist es möglich die Schweißnähte z. B. auch zickzackförmig oder wellenförmig auszuführen.
   Eine zuvor beschriebene doppelte oder dreifache Schweißnaht an der dem Gitter des Motorschutzfilters zugewandten Beutelseite verhindert zuverlässig, dass sich das Beutelmaterial verschließend vor das Gitter legt.
   Die Versteifung der anderen vorhandenen Schweißnähte kann zuverlässig verhindern, dass sich das Beutelmaterial zwischen Rippen im Filterbeutelaufnahmeraum legt und die Abströmung behindert.
2. Zusätzlich in die Beuteloberfläche eingebrachte steife Falten
   Es kann vorkommen, dass die regulären Schweißnähte beim Einlegen in den Filterbeutelaufnahmeraum nicht so zu liegen kommen, dass mit einer Versteifung erreicht werden kann, dass z. B. das Ausblasgitter frei gehalten wird. In solchen Fällen ist es möglich, eine oder mehrere vorstehende Schweißnähte auf der Beutelfläche anzuordnen. Besonders vorteilhaft ist es dabei eine oder mehrere Falten zu bilden, die in sich verschweißt werden.
3. Anstelle einer doppelten Schweißnaht kann das Beabstandungsmittel auch in Form eines zusätzlich aufgeklebten oder aufgeschweißten Streifens aus Kunststoff ausgeführt sein.

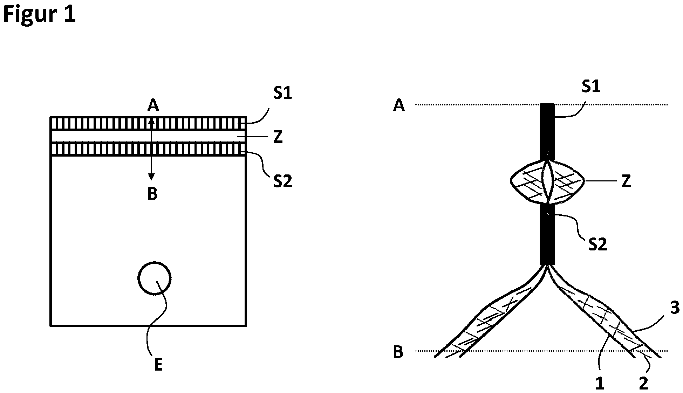

FIG. 1 zeigt eine erste Ausführungsform eines erfindungsgemäßen Staubsaugerfilterbeutels, der in diesem Fall als Flachbeutel ausgebildet ist. In Fig. 1 links dargestellt ist eine Aufsicht auf die Vorderseite des Staubsaugerfilterbeutels, in der auch die Einlassöffnung E angebracht ist. Die Rückseite des Staubsaugerfilterbeutels liegt dabei unterhalb der dargestellten und sichtbaren Vorderseite. Somit besteht dieser Flachbeutel aus zwei Lagen eines Vliesmaterials, die randseitig umlaufend miteinander verschweißt sind. Der erfindungsgemäße Staubsaugerfilterbeutel weist dabei an einer Randseite eine erste, abschließende Schweißnaht S1 auf, sowie beabstandet zur Schweißnaht S1 eine weitere Schweißnaht S2. Die Schweißnaht S2 verläuft dabei parallel zur Schweißnaht S1, so dass zwischen den beiden Schweißnähten S1 und S2 ein Zwischenbereich Z ausgebildet ist. Die Schweißnähte S1 und S2 können beispielsweise jeweils eine Breite von 2,5 mm aufweisen. In FIG. 1 rechts dargestellt ist ein Schnitt entlang der in FIG. 1 links dargestellten Linie A-B. Erkennbar sind die randseitige Schweißnaht S1, sowie die beabstandet hierzu angeordnete zusätzliche Schweißnaht S2. Im Zwischenbereich Z findet dabei eine wulstförmige Ausstülpung des Vliesmaterials, aus dem dieser Flachbeutel gebildet ist, statt. Die einzelnen Vliesstofflagen, aus denen der Filterbeutel gebildet ist, bestehen dabei Ihrerseits aus mindestens drei Lagen, nämlich zwei Scrim-Lagen oder Vliesstofflagen 1 und 3, sowie einer dazwischen angeordneten Faservlieslage 2, die aus losen Fasern oder Filamenten gebildet ist. Abströmseitig, d.h. auf der Außenseite des Filterbeutels können zusätzliche, weitere Materiallagen, beispielsweise eine Meltblown-Lage und/oder eine weitere Spinnvlieslage angeordnet sein. Diese Ausführungsform ist lediglich aus Gründen der Übersichtlichkeit nicht dargestellt.

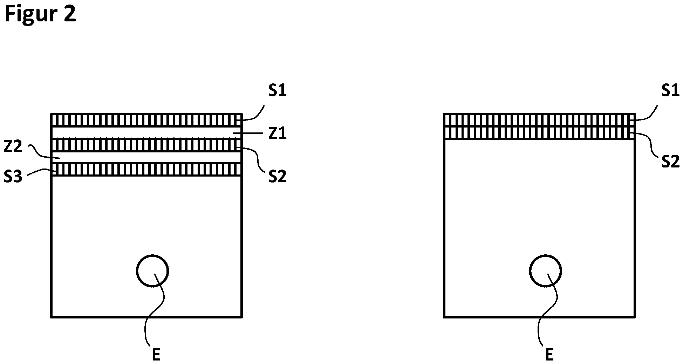

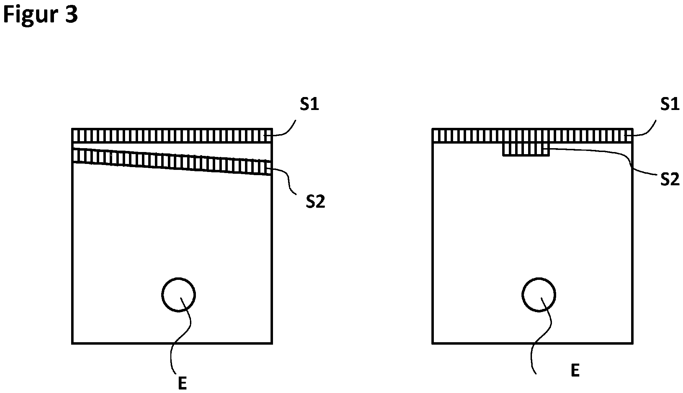

In FIG. 2 und 3 sind vier weitere Ausführungsformen erfindungsgemäßer Staubsaugerfilterbeutel dargestellt.

In FIG. 2 links dargestellt ist ein weiterer Flachbeutel, der eine randseitige Schweißnaht S1, eine erste weitere Schweißnaht S2, sowie eine weitere Schweißnaht S3 aufweist. Zwischen den jeweiligen Schweißnähten S1, S2 und S3 sind dabei Zwischenabschnitte Z1 und Z2 ausgebildet, die auf analoge Weise wie in FIG. 1 rechts dargestellt ausgebildet sind.

FIG. 2 rechts zeigt eine weitere erfindungsgemäße Ausführungsform eines Staubsaugerfilterbeutels, wobei zwei Schweißnähte S1 und S2 unmittelbar aneinander angrenzend ausgebildet sind.

In FIG. 3 links ist eine Variante gezeigt, bei der die weitere Schweißnaht S2 nicht parallel, sondern gewinkelt (z.B. mit einem Winkel von 15°) zur Schweißnaht S1 angeordnet ist.

FIG. 3 rechts zeigt eine erfindungsgemäße Ausführungsform, bei der die weitere Schweißnaht S2 nicht über die gesamte Filterbeutelbreite geführt ist Die Länge der Schweißnaht S2 beträgt hier etwa 30 % der Länge der Schweißnaht S1.

FIG. 4 zeigt die Aufsicht auf einen Prüfling, der zur Bestimmung der Steifigkeit gemäß dem zuvor beschriebenen Verfahren verwendet wird. Die in FIG. 4 dargestellte Aufsicht entspricht einer Aufsicht auf eine aufgestellte Verbindung zweier Vliesstofflagen, die sich bei Blick auf die Schweißnaht S1, wie in FIG. 1 rechts dargestellten Ausführungsform ergibt. Der in FIG. 4 dargestellte Prüfling wird somit aus aus dem Randbereich des Staubsaugerfilterbeutels ausgeschnitten. Die Höhe dieses Prüflings beträgt dabei 60 mm, d.h. im Beispielsfall der FIG. 1 beträgt die Länge der jeweiligen Schenkel des Vliesstoffmaterials, gemessen von dem unteren Ende der zweiten Schweißnaht S2 zu jeder Seite 30 mm. Die Breite wird dabei zu 40-50 mm gewählt, eine Variation dieser Breite innerhalb des angegebenen Bereichs beeinflusst das resultierende Messerergebnis dabei nicht.

Um die Messung nicht durch die aufrechtstehende Schweißnaht, die das Beabstandungsmittel beinhaltet, zu beeinflussen, wird vor Durchführen einer Prüfung die Schweißnaht auf einer Filtermateriallage fixiert. Eine derartige Ausführungsform ist in FIG. 5 dargestellt. Hierbei wird erneut von der Ausführungsform gemäß FIG. 1 ausgegangen. Erkennbar ist, dass ein Klebeband K verwendet wird, um das Beabstandungsmittel auf einer Lage des Vliesstoffmaterials zu fixieren. Das Klebeband K wird dabei am jeweiligen Rand eines Prüfkörpers aufgebracht. Bezugnehmend auf Fig. 3 wird somit die dort aufrecht stehend dargestellte Schweißnaht nach unten geklappt und jeweils links und rechts am Rand des Prüfkörpers fixiert. Da die Messung in der Mitte des Prüflings durchgeführt wird, wird dadurch das Messergebnis nicht beeinflusst.

Die vorliegende Erfindung wird zudem an den nachfolgenden Versuchen näher erläutert. Die Ergebnisse sind in Tabelle 1 wiedergegeben.

**Tabelle 1**

| **Versuch** | **Bezeichnung** | **Materialaufbau und Beschreibung** | **Beschreibung Schweißnaht** | **Gemessene Biegekraft [N]** |
|---|---|---|---|---|
| 1* | Miele HyClean GN | viellagiger Vliesbeutel, hohe Grammatur | Funktionsnaht + "Ziernaht" | 0,93 |
| 2* | Numatic NVM-1CH 601415 | SMS | Funktionsnaht + "Ziernaht" | 0,24 |
| 3* | HEPA-STREAM | SMS | rotative Naht | 0,24 |
| 4* | s-bag ANTI-ODOUR Electrolux | SMS; Seitenfaltenbeutel, Filtermaterial liegt in der Schweißnaht jeweils doppelt (2x Oberseite + 2x Unterseite) | Funktionsnaht + "Ziernaht" | 0,71 |
| 5* | Flink & sauber R010 | viellagiger Vliesbeutel | Funktionsnaht + "Ziernaht" | 0,46 |
| 6* | Vorwerk FP140 | viellagiger Vliesbeutel, sehr hohe Grammatur | Funktionsnaht + "Ziernaht" | 1,1 |
| 7 | Muster 1 | Viellagiger Vliesbeutel; Seitenfalten, Filtermaterial liegt in der Schweißnaht jeweils doppelt (2x Oberseite + 2x Unterseite) | Zwei Schweißnähte, Breite der Nähte jeweils ca. 2,5 mm, ohne Abstand direkt nebeneinander | 2,2 |
| 8 | Muster 2 | Viellagiger Vliesbeutel; Seitenfalten, Filtermaterial liegt in der Schweißnaht jeweils doppelt (2x Oberseite + 2x Unterseite) | Zwei Schweißnähte, Breite der Nähte jeweils ca. 2,5 mm, Abstand ca. 8 mm | 2,9 |
| 9 | Muster 3 | Viellagiger Vliesbeutel; Seitenfalten, Filtermaterial liegt in der Schweißnaht jeweils doppelt (2x Oberseite + 2x Unterseite) | Zwei Schweißnähte, Breite der Nähte jeweils ca. 2,5 mm, Abstand ca. 10 mm | 5,7 |
| 10 | Muster 4 | Viellagiger Vliesbeutel; Seitenfalten, Filtermaterial liegt in der Schweißnaht jeweils doppelt (2x Oberseite + 2x Unterseite) | Zwei Schweißnähte, Breite der Nähte jeweils ca. 2,5 mm, Abstand ca. 12 mm | 5,5 |
| 11 | Muster 5 | Viellagiger Vliesbeutel; Seitenfalten, Filtermaterial liegt in der Schweißnaht jeweils doppelt (2x Oberseite + 2x Unterseite) | Zwei Schweißnähte, Breite der Nähte jeweils ca. 2,5 mm, Abstand ca. 15 mm | 7,0 |
| 12 | Muster 6 | Viellagiger Vliesbeutel; Seitenfalten, Filtermaterial liegt in der Schweißnaht jeweils doppelt (2x Oberseite + 2x Unterseite) | Zwei Schweißnähte, Breite der Nähte jeweils ca. 2,5 mm, Abstand ca. 20 mm | 8,9 |
| 13 | Muster 7 | Viellagiger Vliesbeutel; Seitenfalten, Filtermaterial liegt in der Schweißnaht jeweils doppelt (2x Oberseite + 2x Unterseite) | Zwei Schweißnähte, Breite der Nähte jeweils ca. 2,5 mm, Abstand ca. 30 mm | 9,3 |

| | | | | |
|---|---|---|---|---|
| *: nicht erfindungsgemäß | | | | |

Zur Veranschaulichung der vorliegenden Erfindung wurden verschiedene, handelsübliche Staubsaugerfilterbeutel aus mehrlagigen Vliesmaterialien bzw. SMS-Materialien untersucht. Sämtliche der Staubsaugerfilterbeutel der Vergleichsversuche 1* bis 6* weisen dabei eine randseitige Schweißnaht auf. Zusätzlich kann gegebenenfalls eine Ziernaht vorhanden sein, die allerdings keine versteifende Funktion aufweist. Aus den jeweiligen Staubsaugerfilterbeuteln der Versuche 1* bis 6* wurden Prüflinge, wie in Figur 3 dargestellt, ausgeschnitten und gemäß dem angegebenen Messverfahren untersucht. Die Schweißnaht der jeweiligen Prüflinge verläuft dabei in der Mitte des Prüflings und wird, wie in Figur 4 illustriert, auf einer Seite des Filtermaterials fixiert. Die Bestimmung der Dreipunktbiegesteifigkeit Fₘₐₓ ist als gemessene Wegekraft in Newton angegeben. Ersichtlich ist, dass sämtliche aus dem Stand der Technik bekannten standardmäßig zur Verfügung stehenden Staubsaugerfilterbeutel eine maximale Dreipunktbiegefestigkeit von 1,1 N (Vergleichsversuch 6*) aufweisen. Derartige Steifigkeiten sind allerdings nicht ausreichend, um die eingangs beschriebene Problematik zu verhindern, dass ein entsprechender Staubsaugerfilterbeutel im Betrieb des Staubsaugers sich an die Einlassöffnung anlegt und diese somit teilweise verstopft.

Die erfindungsgemäßen Versuche sind mit den Versuchen 7 bis 13 angegeben. Dabei werden Flachbeutel mit Seitenfalten eingesetzt, deren randseitige Schweißnaht an einer Seite modifiziert wird. Die Veränderung bzw. Modifizierung der Schweißnaht ist in der Spalte "Beschreibung Schweißnaht" angegeben. Bei den erfindungsgemäßen Filterbeuteln gemäß den Versuchen 7 bis 13 wird anstelle der einzig vorhandenen schließenden Randverschweißung diese Schweißnaht doppelt ausgeführt. Beim Versuch 7 wurde eine zweite Schweißnaht, die ebenso wie die standardmäßige schließende Randverschweißung ca. 2,5 mm breit ist, ohne Abstand direkt neben die schließende Randverschweißung aufgebracht. Überraschenderweise konnte bereits dadurch eine Erhöhung der Dreipunktbiegesteifigkeit erzielt werden. Dadurch wird in diesem Bereich eine effektive Aussteifung des Staubsaugerfilterbeutels bewirkt, sodass die doppelt vorhandene Schweißnaht als Beabstandungselement wirken kann und im Betrieb eines Staubsaugerfilterbeutels, der in einen entsprechenden Staubsauger eingesetzt ist, verhindert werden kann, dass der Staubsaugerfilterbeutel sich an die Ansaugöffnung des Motorraumes anlegt.

Falls die Schweißnaht beabstandet zur verschließenden Schweißnaht angeordnet ist (siehe Versuche 8 bis 13, wobei ein jeweils ansteigender Abstand zwischen den beiden Schweißnähten von 8 mm bis 30 mm vorgenommen wird) ist eine weitere Zunahme der erzielten Dreipunktbiegesteifigkeit zu verzeichnen. Als Maximum konnte bei einem Abstand der Schweißnähte von 30 mm eine Kraft von 9,3 N gemessen werden.
Durch das erfindungsgemäß vorhandene Beabstandungsmittel wird somit eine effektive Aussteifung der Seite bewirkt, an der beispielsweise eine Verdoppelung der Schweißnaht vorgesehen ist, wodurch verhindert werden kann, dass der Staubsaugerfilterbeutel die Einströmöffnung des Motorraumes verstopft. Dadurch kann ein Druckabfall innerhalb des Staubsaugers verhindert und eine längere Standzeit des Staubsaugerfilterbeutels erzielt werden, ohne dass es dabei zu einer merklichen Reduzierung des Gesamtvolumens des Staubsaugerfilterbeutels kommt.

## Patentansprüche

1. Staubsaugerfilterbeutel aus Vliesstoff, wobei der Vliesstoff an mindestens einem Rand des Staubsaugerfilterbeutels eine den Beutel abschließende Verbindung (S1) aufweist, bei der mindestens zwei Lagen des Vliesstoffs miteinander verbunden sind,
wobei der Staubsaugerfilterbeutel zumindest an einer Stelle des Randes ein Beabstandungsmittel umfasst, das dadurch gebildet ist, dass im Bereich zur den Beutel abschließenden Verbindung mindestens eine weitere Verbindung (S2, S3) der beiden Lagen des Vliesstoffs ausgebildet ist und/oder mindestens ein versteifendes Element auf mindestens einer der zwei Lagen des Vliesstoffes oder zwischen den zwei Lagen Vliesstoff fixiert ist,
**dadurch gekennzeichnet, dass**
die Dreipunktbiegesteifigkeit Fₘₐₓ eines Prüflings des Staubsaugerfilterbeutels, gemessen nach dem in der Beschreibung dargestellten adaptierten Prüfverfahren gemäß DIN 53 121:2008 bei einer Wegstrecke von 7 mm mindestens 3,5 N beträgt.

2. Staubsaugerfilterbeutel nach Anspruch 1, **dadurch gekennzeichnet, dass** die Dreipunktbiegesteifigkeit Fₘₐₓ des Prüflings mindestens 5 N, bevorzugt mindestens 7N, besonders bevorzugt mindestens 8 N beträgt.

3. Staubsaugerfilterbeutel nach einem der vorhergehenden Ansprüche, **dadurch gekennzeichnet, dass** der Staubsaugerfilterbeutel
a) in Form eines Flachbeutels oder Seitenfaltenbeutels ausgebildet ist und eine erste Lage eines Vliesstoffes, das die Einlassöffnung (E) aufweist, sowie eine zweite Lage eines luftdurchlässigen Vliesstoffes umfasst, wobei die beiden Lagen des Vliesstoffes randseitig durchgehend miteinander verbunden sind, wodurch die beiden Lagen des Vliesstoffes einen abgeschlossenen Beutel bilden, oder
b) als 3D-Beutel, plissierter Staubsaugerfilterbeutel oder Blockbodenbeutel ausgebildet ist.

4. Staubsaugerfilterbeutel nach einem der vorhergehenden Ansprüche, **dadurch gekennzeichnet, dass** die mindestens eine weitere Verbindung (S2, S3) beabstandet zur abschließenden Verbindung (S1) oder unmittelbar an die abschließende Verbindung (S1) angrenzend ausgebildet ist.

5. Staubsaugerfilterbeutel nach einem der vorhergehenden Ansprüche, **dadurch gekennzeichnet, dass** die mindestens eine weitere Verbindung (S2, S3) parallel oder nicht parallel zur abschließenden Verbindung (S1) angeordnet ist.

6. Staubsaugerfilterbeutel nach einem der vorhergehenden Ansprüche, **dadurch gekennzeichnet, dass** die mindestens eine weitere Verbindung (S2, S3) eine geringere Länge als die abschließende Verbindung (S1) aufweist.

7. Staubsaugerfilterbeutel nach einem der vorhergehenden Ansprüche, **dadurch gekennzeichnet, dass** die mindestens eine weitere Verbindung in einem Abstand von 1 bis 50 mm, bevorzugt 3 bis 25 mm, weiter bevorzugt 5 bis 15 mm zur abschließenden Verbindung verläuft.

8. Staubsaugerfilterbeutel nach einem der vorhergehenden Ansprüche, **dadurch gekennzeichnet, dass**, dass das Beabstandungsmittel neben der abschließenden Verbindung (S1) mindestens zwei weitere Verbindungen (S2, S3) der beiden Lagen des Vliesstoffes umfasst, die jeweils im Bereich zur abschließenden Verbindung ausgebildet sind.

9. Staubsaugerfilterbeutel nach vorhergehendem Anspruch, **dadurch gekennzeichnet, dass** die mindestens zwei weiteren Verbindungen (S2, S3)
jeweils untereinander beabstandet und zur abschließenden Verbindung (S1) beabstandet,
eine erste (S2) der mindestens zwei weiteren Verbindungen (S2, S3) unmittelbar an die abschließende Verbindung (S1) angrenzend und die mindestens eine weitere (S3) der mindestens zwei weiteren Verbindungen (S2, S3) jeweils untereinander beabstandet,
oder die mindestens zwei weiteren Verbindungen (S2, S3) aneinander und zur abschließenden Verbindung (S1) angrenzend
ausgebildet sind.

10. Staubsaugerfilterbeutel nach vorhergehendem Anspruch, **dadurch gekennzeichnet, dass** der Abstand der mindestens zwei weiteren Verbindungen (S2, S3) untereinander und/oder der Abstand der ersten der mindestens zwei weiteren Verbindungen (S2, S3) zur abschließenden Verbindung (S1) unabhängig voneinander von 1 bis 50 mm, bevorzugt 3 bis 25 mm, weiter bevorzugt 5 bis 15 mm beträgt.

11. Staubsaugerfilterbeutel nach einem der vorhergehenden Ansprüche, **dadurch gekennzeichnet, dass** unabhängig voneinander die abschließende Verbindung (S1) und/oder die mindestens eine weitere Verbindung (S2, S3) jeweils eine Breite von 1 bis 50 mm, bevorzugt 2 bis 25 mm, besonders bevorzugt von 3 bis 10 mm auweist.

12. Staubsaugerfilterbeutel nach einem der vorhergehenden Ansprüche, **dadurch gekennzeichnet, dass** die mindestens eine weitere Verbindung (S2, S3) über ihre Länge durchgehend ausgebildet ist.

13. Staubsaugerfilterbeutel nach einem der vorhergehenden Ansprüche, **dadurch gekennzeichnet, dass** die mindestens eine weitere Verbindung (S2, S3) parallel zur abschließenden Verbindung (S1) ausgebildet ist.

14. Staubsaugerfilterbeutel nach einem der vorhergehenden Ansprüche, **dadurch gekennzeichnet, dass** der zwischen der abschließenden Verbindung (S1) und der beabstandet hierzu angeordneten mindestens einen weiteren Verbindung (S2, S3) und/oder der zwischen jeweils mindestens zwei beabstandet zueinander angeordneten weiteren Verbindung (S2, S3) ausgebildete Bereich (Z, Z1, Z2) der beiden Lagen des Vliesstoffes unverbunden ist oder lediglich bereichsweise Verbindungen der beiden Lages Vliesstoffes aufweist.

15. Staubsaugerfilterbeutel nach vorhergehendem Anspruch, **dadurch gekennzeichnet, dass** lediglich bereichsweise Verbindungen der beiden Lages Vliesstoffes vorhanden sind, wobei die Verbindungen länglich ausgebildet sind und senkrecht zur abschließenden Verbindung bzw. der mindestens einen weiteren Verbindung (S2, S3) verlaufen oder punktförmig ausgebildet sind.

16. Staubsaugerfilterbeutel nach einem der vorhergehenden Ansprüche, **dadurch gekennzeichnet, dass** in Projektion der ersten auf die zweite Lage des Vliesstoffes der Umriss des Staubsaugerfilterbeutels polygonal, insbesondere rechteckig ausgebildet ist und das Beabstandungsmittel durchgängig über mindestens eine Seite des Polygons, insbesondere des Rechtecks, ausgebildet ist.

17. Staubsaugerfilterbeutel nach einem der vorhergehenden Ansprüche, **dadurch gekennzeichnet, dass** im Bereich einer Ansaugöffnung der Motor-Gebläseeinheit eines für den Staubsaugerfilterbeutel geeigneten Staubsaugers ausgebildet ist.

18. Staubsaugerfilterbeutel nach einem der vorhergehenden Ansprüche, **dadurch gekennzeichnet, dass** auf der ersten und/oder zweiten Lage des Vliesstoffes mindestens ein zusätzliches Beabstandungsmittel ausgebildet ist, das durch eine stellenweise Verbindung von übereinander gefalteten Bereichen der jeweiligen Lage des Vliesstoffes gebildet ist.

19. Staubsaugerfilterbeutel nach einem der vorhergehenden Ansprüche, **dadurch gekennzeichnet, dass** die abschließende Verbindung (S1) und/oder die mindestens eine weitere Verbindung (S2, S3) durch Verschweißen oder durch Verkleben der beiden Lages des Vliesstoffes hergestellt ist.

## Claims

1. Vacuum cleaner filter bag made of nonwoven fabric, the nonwoven fabric having a joint (S1) which seals the bag at at least one edge of the vacuum cleaner filter bag and in which at least two layers of the nonwoven fabric are joined to each other,
the vacuum cleaner filter bag comprising, at least at one place of the edge, a spacing means which is formed by at least one further joint (S2, S3) of the two layers of the nonwoven fabric being configured in the region for the joint which seals the bag and/or at least one reinforcing element being fixed on at least one of the two layers of the nonwoven fabric or between the two layers of nonwoven fabric,
***characterised in that***
the three-point bending strength Fₘₐₓ of a test piece of the vacuum cleaner filter bag, measured according to the test method DIN 53 121: 2008 adapted according to the specification with a path stretch of 7 mm, is at least 3.5 N.

2. Vacuum cleaner filter bag according to claim 1, **characterised in that** the three-point bending strength Fₘₐₓ of the test piece is at least 5 N, preferably at least 7 N, particularly preferably at least 8 N.

3. Vacuum cleaner filter bag according to one of the preceding claims, **characterised in that** the vacuum cleaner filter bag
a) is configured in the form of a flat bag or side-gusseted bag and comprises a first layer of a nonwoven fabric which has the inlet opening (E), and also a second layer of an air-permeable nonwoven fabric, the two layers of the nonwoven fabric being joined to each other continuously at the edge-side, as a result of which the two layers of the nonwoven fabric form a sealed bag, or
b) is configured as 3D bag, pleated vacuum cleaner filter bag or block bottom bag.

4. Vacuum cleaner filter bag according to one of the preceding claims, **characterised in that** the at least one further joint (S2, S3) is configured at a spacing relative to the sealing joint (S1) or abutting directly against the sealing joint (S1).

5. Vacuum cleaner filter bag according to one of the preceding claims, **characterised in that** the at least one further joint (S2, S3) is disposed parallel or non-parallel to the sealing joint (S1).

6. Vacuum cleaner filter bag according to one of the preceding claims, **characterised in that** the at least one further joint (S2, S3) has a smaller length than the sealing joint (S1).

7. Vacuum cleaner filter bag according to one of the preceding claims, **characterised in that** the at least one further joint extends at a spacing of 1 to 50 mm, preferably 3 to 25 mm, particularly preferably 5 to 15 mm, relative to the sealing joint.

8. Vacuum cleaner filter bag according to one of the preceding claims, **characterised in that** the spacing means comprises, in addition to the sealing joint (S1), at least two further joints (S2, S3) of the two layers of the nonwoven fabric which are configured respectively in the region for the sealing joint.

9. Vacuum cleaner filter bag according to the preceding claim, **characterised in that** the at least two further joints (S2, S3) are configured
respectively at a spacing relative to each other and at a spacing relative to the sealing joint (S1),
a first (S2) of the at least two further joints (S2, S3) is configured abutting directly against the sealing joint (S1) and the at least one further (S3) of the at least two further joints (S2, S3) at a spacing respectively relative to each other,
or the at least two further joints are configured abutting against each other and relative to the sealing joint (S1).

10. Vacuum cleaner filter bag according to the preceding claim, **characterised in that** the spacing of the at least two further joints (S2, S3) relative to each other and/or the spacing of the first of the at least two further joints (S2, S3) relative to the sealing joint (S1) is, independently of each other, from 1 to 50 mm, preferably 3 to 25 mm, further preferably 5 to 15 mm.

11. Vacuum cleaner filter bag according to one of the preceding claims, **characterised in that**, independently of each other, the sealing joint (S1) and/or the at least one further joint (S2, S3) respectively has a width of 1 to 50 mm, preferably 2 to 25 mm, particularly preferably of 3 to 10 mm.

12. Vacuum cleaner filter bag according to one of the preceding claims, **characterised in that** the at least one further joint (S2, S3) is configured continuously over its length.

13. Vacuum cleaner filter bag according to one of the preceding claims, **characterised in that** the at least one further joint (S2, S3) is configured parallel to the sealing joint (S1).

14. Vacuum cleaner filter bag according to one of the preceding claims, **characterised in that** the region (Z, Z1, Z2) of the two layers of the nonwoven fabric, which is configured between the sealing joint (S1) and the at least one further joint (S2, S3) disposed at a spacing relative hereto and/or the further joint (S2, S3) disposed between respectively at least two, at a spacing relative to each other, is not joined or has joints of the two layers of nonwoven fabric only in regions.

15. Vacuum cleaner filter bag according to the preceding claim, **characterised in that** joints of the two layers of nonwoven fabric are present only in regions, the joints having an oblong configuration and extending perpendicular to the sealing joint or to the at least one further joint (S2, S3) or having a punctiform configuration.

16. Vacuum cleaner filter bag according to one of the preceding claims, **characterised in that**, in projection of the first towards the second layer of the nonwoven fabric, the contour of the vacuum cleaner filter bag has a polygonal configuration, in particular a rectangular configuration, and the spacing means is configured continuously over at least one side of the polygon, in particular of the rectangle.

17. Vacuum cleaner filter bag according to one of the preceding claims, **characterised in that** is configured in the region of a suction opening of the motor fan unit of a vacuum cleaner which is suitable for the vacuum cleaner filter bag.

18. Vacuum cleaner filter bag according to one of the preceding claims, **characterised in that**, on the first and/or second layer of the nonwoven fabric, at least one additional spacing means is configured, which is formed by joining, in places, regions of the respective layer of the nonwoven fabric which are folded one above the other.

19. Vacuum cleaner filter bag according to one of the preceding claims, **characterised in that** the sealing joint (S1) and/or the at least one further joint (S2, S3) is produced by welding or by glueing together the two layers of the nonwoven fabric.

## Revendications

1. Sachet filtrant d'aspirateur en matériau non tissé, le matériau non tissé comprenant, au moins au niveau d'un bord du sachet filtrant d'aspirateur, une liaison (S1) fermant le sachet, dans laquelle au moins deux couches du matériau non tissé sont reliées entre elles,
le sachet filtrant d'aspirateur comprenant, au moins à un emplacement du bord, un moyen d'écartement qui est formé grâce au fait que, au niveau de la liaison fermant le sachet, est réalisée au moins une autre liaison (S2, S3) des deux couches du matériau non tissé et/ou au moins un élément de rigidification est fixé sur au moins une des deux couches du matériau non tissé ou entre les deux couches de matériau non tissé,
**caractérisé en ce que**
la résistance à la flexion en trois points Fₘₐₓ d'un échantillon du sachet filtrant d'aspirateur, mesurée selon le procédé de contrôle adapté selon DIN 53 121:2008, présenté dans la description, avec une distance parcourue de 7 mm, est d'au moins 3,5 N.

2. Sachet filtrant d'aspirateur selon la revendication 1, **caractérisé en ce que** la résistance à la flexion en trois points Fₘₐₓ de l'échantillon est d'au moins 5 N, de préférence d'au moins 7 N, de préférence d'au moins 8 N.

3. Sachet filtrant d'aspirateur selon l'une des revendications précédentes, **caractérisé en ce que** le sachet filtrant d'aspirateur
a) est conçu sous la forme d'un sachet plat ou d'un sachet à pli latéral et comprend une première couche d'un matériau non tissé, qui comprend l'ouverture d'entrée (E), ainsi qu'une deuxième couche d'un matériau non tissé perméable à l'air, les deux couches du matériau non tissé étant reliées entre elles sur le bord de manière continue, les deux couches du matériau non tissé formant un sachet fermé ou
b) est conçu comme un sachet en 3D, un sachet filtrant d'aspirateur plissé ou un sachet à fond plat.

4. Sachet filtrant d'aspirateur selon l'une des revendications précédentes, **caractérisé en ce que** l'au moins une autre liaison (S2, S3) est réalisée à une certaine distance de la liaison de fermeture (S1) ou directement à proximité de la liaison de fermeture (S1).

5. Sachet filtrant d'aspirateur selon l'une des revendications précédentes, **caractérisé en ce que** l'au moins une autre liaison (S2, S3) est disposée parallèlement ou non parallèlement à la liaison de fermeture (S1).

6. Sachet filtrant d'aspirateur selon l'une des revendications précédentes, **caractérisé en ce que** l'au moins une autre liaison (S2, S3) présente une longueur inférieure à celle de la liaison de fermeture (S1).

7. Sachet filtrant d'aspirateur selon l'une des revendications précédentes, **caractérisé en ce que** l'au moins une autre liaison s'étend à une distance de 1 à 50 mm, de préférence de 3 à 25 mm, de préférence de 5 à 15 mm de la liaison de fermeture.

8. Sachet filtrant d'aspirateur selon l'une des revendications précédentes, **caractérisé en ce que** le moyen d'écartement comprend, à proximité de la liaison de fermeture (S1), au moins deux autres liaisons (S2, S3) des deux couches de matériau non tissé, qui sont réalisées chacune au niveau de la liaison de fermeture.

9. Sachet filtrant d'aspirateur selon la revendication précédente, **caractérisé en ce que** les au moins deux autres liaison (S2, S3) sont écartées entre elles et par rapport à la liaison de fermeture (S1),
une première (S2) des au moins deux autres liaison (S2, S3) est disposée de manière directement adjacente à la liaison de fermeture (S1) et l'au moins une autre (S3) des au moins deux autres liaisons (S2, S3) sont écartées entre elles,
ou les au moins deux autres liaisons (S2, S3) sont disposées de manière adjacente entre elles et par rapport à la liaison de fermeture (S1).

10. Sachet filtrant d'aspirateur selon la revendication précédente, **caractérisé en ce que** la distance des au moins deux autres liaisons (S2, S3) entre elles et/ou la distance entre la première des au moins deux autres liaisons (S2, S3) et la liaison de fermeture (S1) indépendamment entre elles est de 1 à 50 mm, de préférence de 3 à 25 mm, de préférence de 5 à 15 mm.

11. Sachet filtrant d'aspirateur selon l'une des revendications précédentes, **caractérisé en ce que**, indépendamment entre elles, la liaison de fermeture (S1) et/ou l'au moins une autre liaison (S2, S3) présentent chacune une largeur de 1 à 50 mm, de préférence de 2 à 25 mm, de préférence de 3 à 10 mm.

12. Sachet filtrant d'aspirateur selon l'une des revendications précédentes, **caractérisé en ce que** l'au moins une autre liaison (S2, S3) est réalisée de manière continue sur sa longueur.

13. Sachet filtrant d'aspirateur selon l'une des revendications précédentes, **caractérisé en ce que** l'au moins une autre liaison (S2, S3) est réalisée de manière parallèle à la liaison de fermeture (S1).

14. Sachet filtrant d'aspirateur selon l'une des revendications précédentes, **caractérisé en ce que** la zone (Z, Z1, Z2) formée entre la liaison de fermeture (S1) et l'au moins une autre liaison (S2, S3) disposée de manière écartée par rapport à celle-ci et/ou entre au moins les deux autres liaisons (S2, S3) disposées de manière écartée entre elles, des deux couches du matériau non tissé, n'est pas reliée ou présente des liaisons des deux couches de matériau non tissé uniquement à certains endroits.

15. Sachet filtrant d'aspirateur selon la revendication précédente, **caractérisé en ce que** des liaisons des deux couches de matériau non tissé existent uniquement à certains endroits, les liaisons étant réalisées de manière allongée et s'étendant perpendiculairement à la liaison de fermeture ou à l'au moins une autre liaison (S2, S3) ou étant réalisées de manière ponctuelle.

16. Sachet filtrant d'aspirateur selon l'une des revendications précédentes, **caractérisé en ce que**, dans une projection de la première couche sur la deuxième couche de matériau non tissé, le contour du Sachet filtrant d'aspirateur présente une forme polygonale, plus particulièrement rectangulaire et le moyen d'écartement est réalisé de manière continue sur au moins un côté du polygone, plus particulièrement du rectangle.

17. Sachet filtrant d'aspirateur selon l'une des revendications précédentes, **caractérisé en ce que**, au niveau d'une ouverture d'aspiration de l'unité moteur-ventilateur, est réalisé un sachet filtrant d'aspirateur adapté à l'aspirateur.

18. Sachet filtrant d'aspirateur selon l'une des revendications précédentes, **caractérisé en ce que**, sur la première et/ou la deuxième couche de matériau non tissé, se trouve au moins un moyen d'écartement supplémentaire, qui est constitué d'une liaison, par endroits, de zones pliées les unes sur les autres de la couche correspondante de matériau non tissé.

19. Sachet filtrant d'aspirateur selon l'une des revendications précédentes, **caractérisé en ce que** la liaison de fermeture (S1) et/ou l'au moins une autre liaison (S2, S3) est réalisée par soudure ou par collage des deux couches de matériau non tissé.
